# FASCICULE DE BREVET EUROPEEN

(11) **EP 3 514 013 B1**
(45) Date de publication et mention de la délivrance du brevet: **13.04.2022**
(21) Numéro de dépôt: 19152672.2
(22) Date de dépôt: 18.01.2019
(51) Int. Cl.: B60Q 3/64, B60Q 3/217, B60Q 3/54, B60Q 3/78

(54) **SYSTÈME DE DÉCOR COMPRENANT UN DISPOSITIF DE DÉCOR TEL QU'UN DÉCOR LUMINEUX OU UN LISERÉ, MONTÉ DANS UNE STRUCTURE DE SUPPORT TEL QU'UN AGENCEMENT D'HABILLAGE NOTAMMENT D'UN VÉHICULE AUTOMOBILE**
DEKORSYSTEM, DAS EINE DEKORVORRICHTUNG WIE EIN LEUCHTDEKOR ODER EINEN FARBSTREIFEN UMFASST, DER IN EINE HALTERUNGSSTRUKTUR WIE EINE VERKLEIDUNGSANORDNUNG INSBESONDERE EINES KRAFTFAHRZEUGS MONTIERT IST
SYSTEM FOR DECORATION INCLUDING A DEVICE FOR DECORATION SUCH AS A LIGHT DECORATION OR A TRIM, MOUNTED IN A SUPPORT STRUCTURE SUCH AS A COVERING ARRANGEMENT, IN PARTICULAR OF A MOTOR VEHICLE

(30) Priorité: 19.01.2018 FR 1850455
(43) Date de publication de la demande: 24.07.2019
(73) Titulaire: Eurostyle Systems Tech Center France, 36000 Châteauroux (FR)
(72) Inventeur: CHAUSSET, François, 36250 SAINT-MAUR (FR); FRAUDET, Sébastien, 36330 LE POINÇONNET (FR)
(74) Mandataire: Berger, Helmut

(56) Documents cités:
- EP-A1- 2 287 042
- WO-A1-2007/047304
- DE-A1-102015 103 850
- US-A1- 2014 226 353
- US-A1- 2015 009 707
- US-A1- 2016 107 566

## Description

L'invention concerne un système de décor comprenant un dispositif de décor tel qu'un décor lumineux ou un liseré, monté dans une structure de support tel qu'un agencement d'habillage notamment d'un véhicule automobile, comme décrit dans la revendication 1.

Les systèmes de ce type qui sont connus présentent l'inconvénient majeur qu'ils sont difficiles à mettre en place sur la structure de support. EP 2 287 042 A1 montre un système de décor comprenant un décor lumineux monté dans une structure de support.

L'invention a pour but de proposer un système de décor qui pallie ces inconvénients.

Pour atteindre ce but, le système selon l'invention est caractérisé en ce que la partie de fixation est configurée pour une fixation par clipsage sur la structure de support.

L'invention sera mieux comprise, et d'autres buts, caractéristiques, détails et avantages de celle-ci apparaîtront plus clairement dans la description explicative qui va suivre faite en référence aux dessins annexés :
- La figure 1 est une vue en perspective d'un mode de réalisation d'un dispositif de décor lumineux selon l'invention, adapté pour être fixé par clipsage, c'est-à-dire verrouillage mécanique, dans une structure de support ;
- la figure 2 est une vue en perspective d'un accoudoir d'un panneau de porte d'un véhicule automobile, pourvu d'un dispositif de décor lumineux selon l'invention ;
- la figure 3 est une vue en coupe selon la ligne III - III de la figure 2 et illustre la fixation du profil de décor lumineux de la figure 1 dans l'accoudoir du panneau de porte de la figure 2 ;
- la figure 4 est une vue en coupe similaire à la figure 3, mais illustre la fixation d'un dispositif de décor lumineux par clipsage entre deux pièces injectées d'une structure de support. Le système de décor de la figure 4 ne fait pas partie de l'invention;
- la figure 5 illustre une forme particulière du dispositif de décor lumineux selon l'invention.

L'invention sera décrite ci-après, à titre d'exemple non limitatif, dans l'application d'un décor lumineux à un agencement d'habillage d'un véhicule automobile, plus précisément d'un accoudoir de panneau de porte. Bien entendu, le dispositif de décor lumineux selon l'invention peut prendre place dans différents éléments d'habillage de véhicule automobile ou d'autre structure par exemple dans des habillages d'ébénisteries intérieures, des accoudoirs de console et de toute autre genre d'habillage approprié.

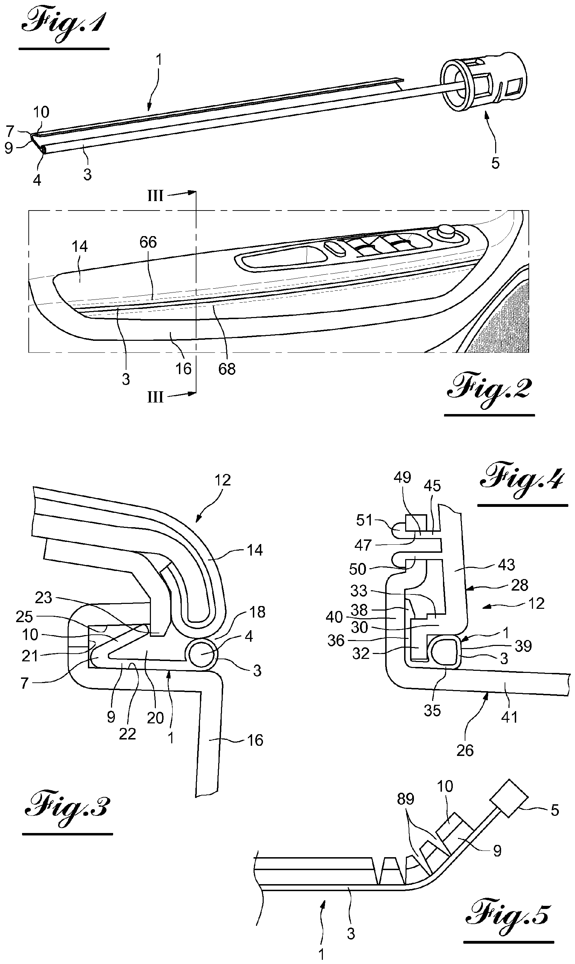

La figure 1 montre, à titre d'exemple, un mode de réalisation d'un dispositif de décor lumineux (1) selon l'invention. Comme on le voit, le dispositif est formé par un profil souple présentant la forme d'une bande qui comprend, le long d'un bord latéral longitudinal une zone de gaine à laquelle est intégré un dispositif de fibres optiques 4 connecté à une source de lumière 5 avantageusement de type LED, et une zone longitudinale 7, qui est configurée pour permettre la fixation du profil dans la structure de support.

La gaine est adaptée pour assurer une diffusion de la lumière propagée par la fibre optique sur toute sa longueur.

Dans le cas de la figure 1, la zone de fixation présente une section transversale en forme d'un V, adaptée pour une fixation par clipsage, c'est-à-dire verrouillage mécanique, dans la structure de support, comme le montre la figure 3. A cette fin, la configuration des deux branches 9, 10 du V est élastiquement déformable entre la position d'écartement des branches de la figure 1 et une position dans laquelle les branches sont plus rapprochées.

Le dispositif de décor lumineux de la figure 1 est adapté pour être monté dans un accoudoir de panneau de porte 12 tel que représenté sur la figure 2, par exemple, de la manière illustrée sur la figure 3. La figure 2 montre la gaine à laquelle est intégré le dispositif de fibres optiques 4, entre le revêtement 14 de l'accoudoir et la partie de panneau de porte 16, appelée médaillon qui constitue une pièce injectée.

En se reportant à la figure 3, on constate que la gaine remplit l'écart 18 entre le revêtement d'accoudoir 14 et le médaillon 16, alors que la zone de fixation 7 du profil de décor est engagé dans le logement 20 délimité par l'extrémité en forme d'un U du médaillon.

La hauteur du logement est supérieure à la largeur de l'écart 18. Grâce à la déformabilité élastique de la configuration en V des deux branches de la zone de fixation 7, cette zone a pu être introduite dans le logement à travers l'écart de passage 18. Dans ce logement, la branche plus courte que la branche qui porte à son extrémité libre la gaine de diffusion de la lumière du dispositif de fibres optiques, est en appui derrière un élément de butée 23 faisant saillie dans le logement. La pointe 19 du V est en appui sur le fond 21 du logement.

D'autre part, la branche 9 du V est en appui par sa face extérieure contre la face intérieure 22 de la paroi du logement et l'extrémité de la branche 10 est appliquée contre l'élément de butée 23 et la face interne 25 du logement, qui est opposée à la face 22. Ainsi la partie de fixation 7 est pratiquement immobilisée dans le logement.

On comprend qu'ainsi, le profil est fixé dans sa structure de support par clipsage, grâce à l'écartement élastique des branches de la zone de fixation 7 après le passage à travers l'écart 18 plus étroit.

Il est encore à noter que la gaine fait saillie perpendiculairement vers l'autre branche 10, à partir du prolongement de la branche 9, dans le passage 18 d'introduction de la partie de fixation 7 dans le logement 20.

La figure 4 illustre la mise en place d'un décor lumineux 1 entre deux pièces injectées 26, 28, par clipsage directement sur l'extrémité 30 de l'une des deux pièces, à savoir la pièce 28 qui constitue la pièce supérieure.

A cette fin, la partie d'extrémité de la pièce est recourbée deux fois d'un angle de 90° de façon que la portion extérieure 32 et la portion intermédiaire 33 de la partie d'extrémité forment un L.

Le profil du décor lumineux présente également la forme générale d'un L. La gaine est placée sur l'extrémité d'une branche, à savoir la branche 35 de façon à former avec l'autre branche 36 un espace dans lequel est destiné à s'engager la portion d'extrémité 32 de la pièce 28.

Comme il ressort des figures, le profil et la partie d'extrémité de la pièce sont dimensionnés de façon que la gaine de forme sensiblement rectangulaire avec la face avant visible et légèrement bombée 39, se trouve située dans l'espace entre les deux portions 32, 33 de l'extrémité de la pièce engagée de son côté par sa portion extérieure 32 dans l'espace entre la gaine et la branche 36 du profil. Cette branche comporte à son extrémité libre une saillie de crochet 38 qui vient en prise derrière le coude établi par les deux portions 32, 33 d'extrémité 30 de la pièce 28.

Comme le montre la figure 4, la pièce 28 est fixée par son extrémité porteuse de profil 1 à l'extrémité en forme d'un L de l'autre pièce 26, dont les branches sont notées 40 et 41. Les extrémités des deux pièces sont imbriquées de façon que les faces extérieures du profil soient en appui contre les deux branches en L 40 et 41 de la pièce 26.

Il est à noter que la branche extérieure 40 de la pièce 26 est parallèle à la partie 43 de la pièce 28, située au-dessus de l'extrémité 30 de celle-ci.

Les deux pièces 28 et 26 sont assemblées dans cette configuration imbriquée par leurs extrémités par un élément de fixation amovible 45 en forme d'un bouton élastiquement déformable, prévu sur la partie 43 de la pièce 28, que l'on fait passer par un trou 47 pratiqué dans l'extrémité 40 de la pièce 26. Le bouton 45 a un fût qui se compose de deux lamelles parallèles 49, 50 qui se terminent chacune par une saillie de crochet 51.

Les deux lamelles peuvent être rapprochées élastiquement pour permettre le passage du bouton à travers le trou 47. En s'écartant après le passage, les saillies de crochet 51, en venant en prise derrière l'extrémité 40 de la pièce 26, assurent l'assemblage des deux pièces 26 et 28, l'une sur l'autre.

La figure 5 illustre une caractéristique de l'invention permettant de rendre le profil encore plus souple pour qu'il puisse être disposé sur des surfaces ayant un rayon de courbure plus faible. A cette fin, il suffit de réaliser des découpes 89 sur la ou les ailes du profil qui s'étendent perpendiculairement à la direction longitudinale du profil, et dont la forme et l'écartement entre deux découpes adjacentes sera choisi avantageusement en fonction de la courbure souhaitée. Les découpes pourraient être en forme d'un V se rétrécissant en direction de la profondeur des découpes, choisie elle aussi en fonction des rayons de courbures.

Le système de décor lumineux selon l'invention présente de multiples avantages. Les fibres optiques ne conduisent ni électricité, ni chaleur et peuvent être utilisées comme moyen de communication et d'éclairage d'ambiance dans des domaines d'application très différents.

Le système selon l'invention permet d'obtenir des effets lumineux plus ou moins fins à des très faibles encombrements, à basse consommation électrique et à une durée de vie élevée.

L'invention permet de réaliser des dessins lumineux d'une grande variété dû à la forme et au positionnement du profil par rapport aux pièces environnantes et en donnant à la gaine guide de lumière une forme appropriée, qui pourrait être circulaire, bombée, affleurante, désaffleurante ou encore différente. De plus, la mise en œuvre de l'invention ne nécessite pas d'investissements industriels complexes et onéreux.

L'invention vient d'être décrite, à titre d'exemple non limitatif, dans son mode de réalisation comprenant, comme dispositif de décor, un décor lumineux. Mais d'autres versions de décor peuvent être utilisées. L'élément de décor (3) pourrait ainsi être un liseré qui remplacerait alors la gaine.

## Revendications

1. Système de décor comprenant un dispositif de décor (1) tel qu'un décor lumineux ou un liseré et comprenant une structure de support (12) tel qu'un agencement d'habillage d'un véhicule automobile, le dispositif de décor (1) étant monté dans la structure de support (12), le dispositif de décor étant un profil souple qui comporte un élément de décor (3) disposé au niveau d'un bord longitudinal du profil et qui comporte une partie (7) de fixation sur la structure de support (12), la partie de fixation (7) constituant le restant du profil et comportant deux branches (9, 10), le profil présentant une forme de bande dans laquelle une des branches (9) porte à sor extrémité libre le dispositif de décor (1) et le profil comprend des découpes (89) dans la partie de fixation (7) perpendiculairement à la direction longitudinale du profil, le système de décor étant **caractérisé en ce que** la structure de support (12) comprend un passage (18) d'introduction de la partie de fixation (7) dans un logement (20), un écartement des deux branches (9, 10) étant élastiquement variable entre une valeur maximale initiale et une valeur plus faible permettant le passage de la partie de fixation (7) dans le logement (20) et assurant la fixation par clipsage sur la structure de support (12).

2. Système selon la revendication 1, **caractérisé en ce que** le dispositif de décor (1) est un dispositif de décor lumineux et **en ce que** l'élément de décor (3) est en forme d'une gaine dans laquelle est intégré un dispositif de fibre optique (4) connectée à une source de lumière avantageusement de type LED (5).

3. Système selon la revendication 2, **caractérisé en ce que** la gaine est adaptée pour assurer une diffusion de la lumière sur toute sa longueur.

4. Système selon l'une quelconque des revendications 2 ou 3, **caractérisé en ce que** le dispositif de décor lumineux est adapté pour être monté dans un accoudoir de panneau de porte (12), la gaine étant entre un revêtement (14) de l'accoudoir et la partie de panneau de porte (16), appelée médaillon qui constitue une pièce injectée.

5. Système selon la revendication 1, **caractérisé en ce que** l'élément de décor (3) est un liseré.

6. Procédé de montage d'un dispositif de décor (1) tel qu'un décor lumineux ou un liseré dans une structure de support (12) tel qu'un agencement d'habillage d'un véhicule automobile, le dispositif de décor étant un profil souple qui comporte un élément de décor (3) disposé au niveau d'un bord longitudinal du profil et qui comporte une partie (7) de fixation sur la structure de support (12), la partie de fixation (7) constituant le restant du profil et comportant deux branches (9, 10), le profil présentant une forme de bande dans laquelle une des branches (9) porte à son extrémité libre le dispositif de décor (1) et le profil comprend des découpes dans la partie de fixation (7) perpendiculairement à la direction longitudinale du profil, le procédé étant **caractérisé en ce que** le procédé comprend une introduction de la partie de fixation (7) dans un logement (20) de la structure de support (12) par un passage (18) d'introduction de la structure de support rapprochant les deux branches (9, 10) lors du passage (18) puis écartant les deux branches (9, 10) dans le logement (20), assurant ainsi la fixation par clipsage sur la structure de support.

## Patentansprüche

1. Dekorsystem, das eine Dekorvorrichtung(1) wie ein Leuchtdekor oder einen Farbstreifen umfasst, und umfassend eine Halterungsstruktur (12) wie eine Verkleidungsanordnung eines Kraftfahrzeugs, wobei die Dekorvorrichtung (1) in die Halterungsstruktur (12) montiert ist, wobei die Dekorvorrichtung ein flexibles Profil ist, das ein Dekorelement (3) umfasst, das auf der Ebene eines Längsrands des Profils angeordnet ist, und das einen Befestigungsteil (7) auf der Halterungsstruktur (12) umfasst, wobei der Befestigungsteil (7) den Rest des Profils darstellt, und zwei Schenkel (9, 10) umfasst, das Profil Ausschnitte (89) im Befestigungsteil (7) senkrecht zur Längsrichtung des Profils umfasst, wobei das Dekorsystem **dadurch gekennzeichnet ist, dass** das Profil die Form eines Bands aufweist, in dem einer der Schenkel (9) an seinem freien Ende die Dekovorrichtung (1) trägt, und dadurch, dass die Halterungsstruktur (12) einen Durchgang (18) zur Einführung des Befestigungsteils (7) in eine Aufnahme umfasst, wobei ein Abstand der zwei Schenkel (9, 10) zwischen einem anfänglichen maximalen Wert und einem geringeren Wert elastisch variiert werden kann, wodurch der Durchgang des Befestigungsteils (7) in die Aufnahme (20) ermöglicht und die Befestigung durch Schnappen der Halterungsstruktur (12) sichergestellt wird.

2. System nach Anspruch 1, **dadurch gekennzeichnet, dass** die Dekorvorrichtung (1) eine Leuchtdekorvorrichtung ist und dadurch, dass das Dekorelement (3) die Form einer Hülle aufweist, in die eine Vorrichtung aus optischen Fasern (4), verbunden mit einer Lichtquelle, vorteilhafterweise vom Typ LED (5), integriert ist.

3. System nach Anspruch 2, **dadurch gekennzeichnet, dass** die Hülle ausgelegt ist, um eine Diffusion des Lichts auf ihrer gesamten Länge sicherzustellen.

4. System nach einem der Ansprüche 2 oder 3, **dadurch gekennzeichnet, dass** die Leuchtdekorvorrichtung ausgelegt ist, dass sie in einer Türblattarmlehne (12) montiert zu sein, wobei die Hülle zwischen einer Verkleidung (14) der Armlehne und dem Teil der Türverkleidung (16), bezeichnet als Medaillon, das ein injiziertes Stück darstellt, ist.

5. System nach Anspruch 1, **dadurch gekennzeichnet, dass** das Dekorelement (3) ein Farbstreifen ist.

6. Verfahren zur Montage einer Dekorvorrichtung (1) wie z. B. eines Leuchtdekors oder eines Farbbands in einer Halterungsstruktur (12) wie z. B. einer Verkleidungsanordnung eines Kraftfahrzeugs, wobei die Dekorvorrichtung ein flexibles Profil ist, das ein Dekorelement (3) umfasst, das auf der Ebene eines Längsrands des Profils angeordnet ist, und das einen Befestigungsteil (7) auf der Halterungsstruktur (12) umfasst, wobei der Befestigungsteil (7) den Rest des Profils darstellt und zwei Schenkel (9, 10) umfasst, das Profil Ausschnitte im Befestigungsteil (7) senkrecht zur Längsrichtung des Profils umfasst, wobei das Verfahren **dadurch gekennzeichnet ist, dass** das Profil die Form eines Bands aufweist, in dem einer der Schenkel (9) an seinem freien Ende die Dekorvorrichtung (1) trägt, und dadurch, dass das Verfahren eine Einführung des Befestigungsteils (7) in eine Aufnahme (20) der Halterungsstruktur (12) durch einen Durchgang (18) zur Einführung der Halterungsstruktur (12) umfasst, der die zwei Schenkel (9, 10) beim Durchgang (18) annähert, dann die zwei Schenkel (9, 10) in der Aufnahme (20) voneinander entfernt, wodurch die Befestigung durch Schnappen auf der Halterungsstruktur sichergestellt wird.

## Claims

1. A decoration system comprising a decoration device (1) such as a light decoration or a trim and comprising a support structure (12) such as a cladding arrangement of a motor vehicle, the decorative device (1) being mounted in the support structure (12), the decoration device (1) being a flexible profile that includes a decorative element (3) arranged at a longitudinal edge of the profile and which includes a fastening part (7) on the support structure (12), the fastening part (7) constituting the remainder of the profile and including two branches (9, 10), the profile comprises cutouts (89) in the fastening part (7) perpendicular to the longitudinal direction of the profile, the decoration system being **characterized in that** the profile being in the form of a band in which one of the branches (9) bears, at its free end, the decoration device (1) and **in that** the support structure (12) comprises a passage (18) for introducing the fastening part (7) into a housing (20), a separation of the two branches (9, 10) being elastically variable between an initial maximum value and a lower value allowing the passage of the fastening part (7) in the housing (20) and ensuring the fastening by clipping on the support structure (12).

2. The system according to claim 1, **characterized in that** the decoration device (1) is a light decoration device and **in that** the decorative element (3) is in the form of a sheath in which an optical fiber device (4) is integrated that is connected to a light source, advantageously of the LED type (5).

3. The system according to claim 2, **characterized in that** the sheath is suitable for ensuring a diffusion of the light over its entire length.

4. The system according to any one of claims 2 or 3, **characterized in that** the light decoration device is suitable for being mounted in an armrest of a door panel (12), the sheath being between a covering (14) of the armrest and door panel part (16), called inset, that makes up an injected part.

5. The system according to claim 1, **characterized in that** the decorative element (3) is a trim.

6. A method for mounting a decoration device (1) such as a light decoration or a trim in a support structure (12) such as a cladding arrangement of a motor vehicle, the decoration device being a flexible profile that includes a decorative element (3) arranged at a longitudinal edge of the profile and that includes a fastening part (7) on the support structure (12), the fastening part (7) constituting the remainder of the profile and including two branches (9, 10), the profile comprises cutouts in the fastening part (7) perpendicular to the longitudinal direction of the profile, the method being **characterized in that** the profile being in the form of a band in which one of the branches (9) bears, at its free end, the decoration device (1) and **in that** the method comprises introducing the fastening part (7) in a housing (20) of the support structure (12) through a passage (18) for introducing the support structure (12) bringing the two branches (9, 10) closer together during the passage (18), then separating the two branches (9, 10) in the housing (20), thus ensuring the fastening by clipping on the support structure.
